# NEW EUROPEAN PATENT SPECIFICATION

(11) **EP 0 360 802 B2**
(45) Date of publication and mention of the opposition decision: **31.03.2004**
(45) Mention of the grant of the patent: 11.12.1996
(21) Application number: 88903031.8
(22) Date of filing: 02.03.1988
(51) Int. Cl.: C04B 35/10, A61C 7/12, A61K 6/06

(54) **METHOD FOR MAKING CERAMIC ORTHODONTIC BRACKETS**
VERFAHREN ZUR HERSTELLUNG EINES KERAMISCHEN ORTHODONTISCHEN BRACKETS
PROCEDE DE FABRICATION DE FIXATIONS ORTHODONTIQUES EN CERAMIQUE

(43) Date of publication of application: 04.04.1990
(73) Proprietor: 3M Unitek Corporation, St. Paul, Minnesota 55133-3427 (US)
(72) Inventor: NEGRYCH, John, A., Timberlane Subdiv., Talbott, TN 37877 (US); GILLE, Henrick, K., Van Nuys, CA 91407 (US); KELLY, John, S., Temple City, CA 91780 (US)
(74) Representative: Wilhelm, Stefan
(86) International application number: PCT/US1988/000629
(87) International publication number: WO 1989/008085

(56) References cited:
- EP-A- 0 218 279
- DE-A- 2 120 802
- GB-A- 1 397 974
- US-A- 3 769 049
- US-A- 4 219 617
- US-A- 4 396 595

## Description

### Background of the Invention

Orthodontic treatment of improperly positioned teeth involves the application of mechanical forces to urge the teeth into correct alignment. The most common form of treatment uses orthodontic brackets which are small slotted bodies configured for direct cemented attachment to the front (labial) or rear (lingual) surfaces of the teeth, or alternatively for attachment to metal bands which are in turn cemented or otherwise secured around the teeth.

A resilient curved arch wire is then seated in the bracket slots, and the arch wire is bent or twisted before installation, whereby the restoring force exerted by the seated resilient wire tends to shift the teeth into orthodontically correct alignment. Depending on the shape of the arch wire, and the orientation of the bracket slot, it is possible to apply forces which will shift, rotate or tip the teeth in any desired direction.

Stainless steel is in many ways an ideal material for orthodontic brackets because this metal is strong, non-absorbent, weldable, and relatively easy to form and machine. A significant drawback of metal appliances, however, relates to cosmetic appearance when the patient smiles. Adults and older children undergoing orthodontic treatment are often embarrassed by the "metallic smile" appearance of metal bands and brackets, and this problem has led to various improvements in recent years.

One relates to development of adhesives, bracket bases, and techniques for direct cemented attachment of brackets to at least the anterior teeth which are prominently displayed when smiling. Direct cementation eliminates the need for metal toothbands which are a major factor in the metallic-smile problem. Part of this has included development of smaller brackets which are less obtrusive.

Still another area of improvement involves use of nonmetal materials for the brackets. Plastic orthodontic brackets have been used, but plastic is not an ideal material because it lacks the structural strength of metal, and is susceptible to staining and other problems. Some of these problems are solved or alleviated by ceramic materials which have recently been proposed for orthodontic brackets. Both the plastic and ceramic materials present a significantly improved appearance in the mouth, and often the only visible metal component is a thin arch wire which is cosmetically acceptable. It has been proposed to use single crystal sapphire for brackets, but transparent ceramics have undesirable prismatic effects and single crystal brackets are subject to cleavage. Other ceramic brackets have been largely opaque so that they either do not match tooth color or require coloring which is uneconomic.

This invention is directed to a ceramic bracket which achieves further cosmetic improvement by having a translucent quality which takes on the color of the underlying tooth to make the bracket blend with the tooth. From the appearance standpoint, the translucent bracket is a significant improvement over both transparent and opaque brackets of nonmetallic construction.

### Summary of the Invention

The improvement of this invention relates to a method for making a ceramic orthodontic bracket, by pressing a powder consisting essentially of aluminum oxide plus magnesium oxide in the range of from 0.05 to 0.3 percent by weight, at a sufficient pressure for forming a compact having a shape corresponding to at least a portion of the shape of the completed bracket, and sintering the compact at a temperature in the range of from 1750 to 1850°C for a sufficient time for forming a bracket that is polycrystalline, has sufficient strength for withstanding the loads applied during orthodontic correction, and has sufficient translucency that visible light emitted from the front surface of the bracket comprises a portion backscattered from within the bracket and a sufficient portion transmitted from the base of the bracket to take on the color of an underlying tooth.

Preferably the time and temperature of sintering are such that the bracket has an in-line optical transmittance for visible-light of at least 20% and preferably in the range of from 20 to 60%. The body is of a neutral color which, taken in combination with the important property of translucency, makes the bracket nearly invisible when viewed against the tooth from a relatively short distance.

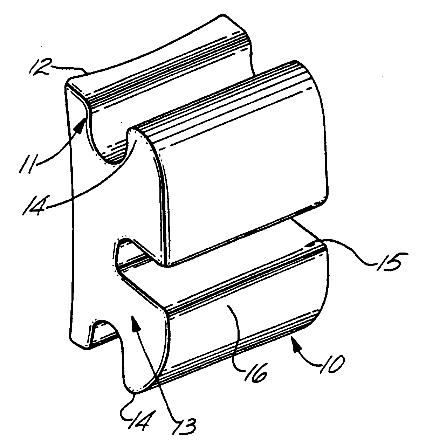

### Description of the Drawing

The drawing is a pictorial view of an orthodontic bracket made according to the invention.

### Description of a Preferred Embodiment

The drawing shows an exemplary orthodontic appliance in the form of an orthodontic bracket 10. The bracket has a base 11 suitable for either direct bonding to a tooth, or attachment to any kind of mounting fixture. A tooth-facing surface 12 of the base 11 is preferably conventionally concavely curved about both a mesiodistal axis and an apical axis to match the natural convexity of the tooth labial surface, but other curvatures can be used to accommodate lingual bracket positioning.

A bracket body 13 extends from the base 11 to define bracket tie wings 14 for ligature anchorage, and a mesiodistally oriented arch-wire slot 15 extending from an outer body surface 16 into the bracket body. The presence or absence of tie wings (of either single-or twin-wing configuration) is not a feature of the invention, and the base and arch-wire slot may be angulated as desired to minimize or eliminate torquing or other bends of the arch wire.

The orthodontic bracket is translucent since it is a polycrystalline article made of alpha aluminum oxide. It is important that the aluminum oxide has a high degree of optical transmittance in the visible spectrum, but also that it diffuse the light passing through the bracket. As is well known, human teeth have a broad range of color (quantified, for example, by the commercially available Vita shade system covering the range Al through D4), and to make the improved orthodontic bracket effectively "disappear" when in place, it should assume the color of the underlying tooth. Thus, the ceramic material should be neutral, and neither add color to the light passing through nor subtract color by appreciable absorption. Aluminum oxide is particularly suitable since its optical transmittance is substantially constant throughout the visible spectrum and it therefore does not change the color of light passing through the bracket. It is also desirable since it is strong, hard, inexpensive and readily available. The mechanical properties of aluminum oxide can be distinguished from the relatively low order properties available in organic materials such as plastics which may also be translucent.

It has been proposed to use transparent single crystal aluminum oxide or sapphire for orthodontic brackets. This material is grown in the form of a single crystal or closely aligned bicrystals having a cross section close to the desired cross section of the bracket. The crystal is grown in rods which are sliced to the size of individual brackets. These can then be cut and shaped totheirfinal form by abrasive grinding. The idea was that the highly transparent bracket would show the tooth color. Such a transparent bracket also has refractive effects and does not fully achieve the desired result. Teeth are neither glassy nor opaque, and a transparent bracket may still be quite noticeable.

More significantly, the single crystal material is subject to cleavage under loads that occur in the course of orthodontic treatment. Essentially point forces of very high magnitude are applied to orthodontic brackets by loading of the associated arch wire and tie wings, and also during chewing. These high point loads can initiate cleavage along crystallographic planes of the sapphire, resulting in breakage. A significant shortcoming of single crystal aluminum oxide is a consequence of its manufacturing. Single crystals or large bicrystals or the like may be grown to near net shapes by a modified Czochralski method. However, grinding may be required to form the base, the arch wire slot or other surfaces. The grinding introduces surface imperfections which can have a devastating effect on strength. Cracks initiating at such imperfections propagate through the crystal, resulting in breakage at abnormally low stresses, well below the stresses one would expect.

It is desirable that the bracket be translucent rather than transparent. Light passes through a transparent ceramic in a straight line. Thus, when a single crystal of sapphire is placed on a printed page, the text can be read through the crystal. In a translucent material, a large proportion of light passes through the crystal, but not in a straight path. Optical irregularities in the bulk material cause the light passing therethrough to be refracted, reflected, and otherwise scattered so that it is diffuse.

Translucence is a relative property of a material. This can be visualized by considering water to which milk is added. When a few drops of milk are added to the water, it becomes cloudy or milky. The formerly completely transparent water is now somewhat translucent in that a portion of the light transmitted through the solution is diffused by scattering from the milk particles. As more milk is added, more of the light is diffused until it becomes impossible to read through the solution. Further, the solution takes on the color of the milk as more light entering the front of the solution is backscattered by the milk particles and less is reflected from whatever surface is behind the solution. When the solution is slightly cloudy an overwhelming proportion of the light emitted from the face of the solution is reflected from the surfaces behind the solution and a minor proportion is backscattered by particles of milk within the solution. These proportions reverse as more milk is added.

It is significant that the translucence be a bulk property of the material rather than a surface effect. Some light diffusion can be obtained by roughening a surface as, for example, with frosted glass. This is not completely satisfactory in an orthodontic bracket, however, since the surface is continually wet, and the principal change in the index of refraction occurs at the air-liquid interface which is nearly smooth. Further, it is undesirable to have roughened surfaces on orthodontic appliances because of the adhesion of substances in the mouth. As pointed out above, rough surfaces may also have imperfections which serve as a source for initiation of cracks. Since ceramics do not have the ductility of metals, roughness can significantly degrade strength.

To minimize the contrast between the bracket and the tooth, it should have the same color as the tooth. Color is perceived due to light reflected or emitted from a surface. One could form a spectrum of appliances to match the range of natural tooth colors, but the cost and inconvenience would be undesirable. It is better to see the tooth color itself, as seen through a translucent bracket.

In order for the orthodontic bracket to assume the color of the underlying tooth, it is important that sufficient light seen from the front surface of the bracket attached to the tooth be light that has been transmitted from the tooth surface, and that the tooth color is not overwhelmed by light backscattered from optical irregularities within the bracket. In other words, a substantial amount of the incident light should pass through the bracket, albeit diffused, to the base for reflection off of the tooth surface, and then be retransmitted through the bracket to be emitted from the front surface.

Since the bracket is translucent rather than transparent, a portion of the light is backscattered by the internal optical irregularities in the bracket. The backscattering is preferably minimized since the backscattered light tends to be white and will almost invariably be different from the tooth color. Further, by using a translucent aluminum oxide bracket, all of the optical properties of the tooth are mimicked. Teeth are not opaque and considerable attention has been devoted to achieving limited translucence in materials used for prostheses to mimic the replaced or repaired tooth. Such concern is alleviated by a translucent bracket since light. transmitted through the tooth as well as that light reflected from the front, is, in turn, emitted substantially unchanged from the translucent bracket.

The amount of visible light transmitted through the polycrystalline aluminum oxide used to make the bracket is at least 20% and preferably is in the range of from 20% to 60%, and the light backscattered from internal optical irregularities within the bracket is in the range of from 40% to 80%. This tranlucence is measured by in-line transmission of light through a specimen 0.5 mm thick, the light being in the wavelength range of from 0.4 to 0.8 µm (microns). This translucence assures that the light seen from the front surface includes sufficient light that has been reflected from the tooth surface to take on the color of the underlying tooth.

The translucence measurement is made by illuminating a sample 0.5 mm. thick with a collimated beam and measuring the proportion of light emitted at the opposite surface of the sample in the direction of the collimated beam. Since the light is scattered by the optical irregularities within the sample, a small proportion may be transmitted in the direction of the incident beam and a large proportion scattered in other directions. This is to be distinguished from a transmittance measurement where much of light is absorbed by the medium through which it passes. The scattering is desirable in the orthodontic bracket since it conveys the color of the underlying tooth and diffuses it without prismatic effects. Aluminum oxide has little absorption and the limited absorption is uniform throughout the visible spectrum so that no color change is introduced.

In a preferred embodiment, translucence is obtained in an orthodontic bracket by forming it from polycrystalline aluminum oxide which is inherently transparent. By polycrystalline is meant that the bracket is made of a ceramic having a multiplicity of randomly oriented crystals self-bonded together. That is, the adjacent crystals are separated by a grain boundary of substantially the same material as the crystals, rather than being cemented together by a different material.

The orthodontic bracket is made by pressing and sintering aluminum oxide. The parts are fabricated by pressing powder to a desired shape and sintering the pressed compact at a sufficient time and temperature that the bracket is translucent and has sufficient strength to withstand the high loads applied to the bracket during orthodontic corrections.

The polycrystalline aluminum oxide has essentially a single phase and substantially zero porosity to maintain a high degree of optical transmittance. It is preferably made of 99.99% alpha aluminum oxide to which a small amount of magnesium oxide is added for controlling grain growth. Starting with 99.99% aluminum oxide is desirable for maximum strength and freedom from chromatic effects. Magnesium oxide in the range of from 0.05% to 0.3% is added to the aluminum oxide. This material limits grain growth so that the grain size of the sintered polycrystalline bracket is not too large. It is believed that a portion of the magnesium oxide combines with the aluminum oxide in a spinel type structure in the grain boundaries.

Thus, after sintering, the polycrystalline bracket has an average grain size in the range of from 10 to 50 microns. The composition and the sintering time and temperature should be controlled so that the average grain size in the completed orthodontic bracket is in this range for high optical transmittance and strength. Preferably the average grain size is 30 µm (microns) and the range of grain size is from 8 to 85 µm (microns), which gives good packing and high strength. If the grain size is too large, strength may be reduced due to the greater distances through which cracks may propagate before encountering a grain boundary.

The particle size of the powder from which the bracket is made is preferably in the range of from 1/2 to one µm (micron). The aluminium oxide powder is typically chemically precipitated material and has reasonably uniform grain size. Few particles as large as three µm (microns) are found, and these may be agglomerates of smaller particles.

To give the powder some green strength when pressed into a compact, a small amount of a temporary organic binder such as a paraffin wax, polyethylene glycolor polyvinyl alcohol is included in the powder mix. From 0.75 to 3% by weight of polyvinyl alcohol is preferred. The polyvinyl alcohol is mixed with water to wet the particle surfaces and the slurry is then spray dried. The temporary binder is removed in subsequent firing.

A measured quantity of the powdery mixture of aluminum oxide powder, magnesium oxide powder and temporary binder is placed in the die cavity of a highpressure hydraulic press. The amount of powder is just enough to form one blank from which a bracket is formed. The die has a cavity with a cross section corresponding to at least a portion of the desired shape of the appliance being formed. The arch-wire slot and the undercuts under the tie wings may be completely or partially formed in this operation, or are preferably ground later.

A punch having the cross section of the die cavity is pressed into the powder in the cavity at 1400 to 1550 kg/cm² to tightly pack the powder. In a preferred embodiment, a lateral slide is also employed for forming the curved base of the bracket. Such punches, dies, and slides are conventionally used for pressing a broad variety of metals or ceramics to desired shapes. After pressing the powder, a green compact having at least part of the shape of the finished bracket, albeit larger because of subsequent shrinkage, is ejected from the die cavity. Preferably, multiple die cavities are used in commercial operations for high productivity.

Alternatively, the compact from which the bracket is made may be extruded under pressure, formed by injection molding, or may be compressed isostatically, as are well known.

The somewhat fragile green compact is then fired in air at a temperature in the range of from 1300 to 1400°C for an hour. By heating in an oxidizing environment, the organic binder and any inadvertent organic contamination is vaporized or oxidized so as to be removed completely and not affect the color of the finished bracket.

The compact is slowly heated to the firing temperature so that any residual carrier liquid, vaporized binder and combustion products of the binder can be removed without disrupting the delicate compact. A heating rate of up to 100°C per hour has been found satisfactory. Further, by heating to a temperature in the range of from 1300 to 1400°C, some sintering of the compact occurs, greatly increasing its strength for subsequent handling.

The compact is then sintered at temperatures in the range of from 1750°C to 1850°C in an environment of flowing high purity hydrogen. The highest commercially available purity of hydrogen is used.

The sintering time is preferably at least one hour, somewhat longer times being preferred for lower temperatures. The time should be at least sufficient to produce a translucent bracket having an in-line transmittance of visible light in excess of 20%. The heating in hydrogen should be slow enough that hydrogen replaces other gases in the interstices of the compact before sintering closes paths through which gas can escape. This helps eliminate residual porosity after sintering.

In a preferred embodiment the bracket is maintained at a temperature above 1750°C for at least five hours and at the maximum sintering temperature for at least one hour. Preferably the bracket is maintained above 1750°C for at least twelve hours and at the maximum temperature for as much as six hours. The maximum sintering temperature differs slightly for different batches of raw materials and can be determined empirically for obtaining the desired degree of translucency and mechanical strength. For example, a maximum sintering temperature of 1820°C for six hours has been found suitable for most purposes. At such sintering times and temperatures, the original particles of aluminum oxide powder sinter together to form a bracket having a density very close to 100% of the theoretical density of alpha aluminum oxide.

For example, a translucent ceramic bracket is made by mixing 99.99% aluminum oxide powder having an average particle size of a little less than one µm (micron) with 0.2% by weight of magnesium oxide powder. One percent by weight of polyvinyl alcohol is added in sufficient dionized water solution to make a slurry that can be thoroughly mixed. The powder mixture is spray dried and a measured quantity sufficient to make the blank for one bracket is added to the cavity of a forming die. A hydraulic press presses a punch into the die cavity at a pressure of 1450 kg/cm² to form a green compact. The green compact is then heated in air at a rate of 100°C per hour to a maximum temperature of 1300°C where it is held for an hour and then furnace cooled. The compact is then heated in hydrogen to 1750°C at a rate of about 70°C per hour. It is slowly heated to 1820°C over a period of about six hours, held at 1820°C for six hours, and cooled over a period of about six hours to 1750°C. The total cycle time from room temperature to room temperature is in excess of 48 hours.

After sintering, the brackets are tumbled in conventional abrasive for slightly rounding the edges and removing any undesirable "flash" or protrusions from the surfaces. Finally, any machining operations are conducted for shaping the completed bracket. For example, the arch-wire slot and tie wing undercuts may be ground with diamond wheels. The brackets may be tumbled after grinding.

The sintered polycrystalline aluminum oxide orthodontic bracket is translucent. The in-line optical transmittance through the polycrystalline alumina is at least 20%, and preferably is in the range of from 20 to 60%. Light passing through the bracket is, however, diffused by the translucent polycrystalline aluminum oxide.

The reason light passing through the polycrystalline aluminum oxide is diffused and partly backscattered is not completely known. Since the material is polycrystalline, adjacent crystals have different, largely random crystallographic orientations. This results in variations in index of refraction along any straight-line path through the bracket. Small refractive effects may occur at grain boundaries, resulting in a multiplicity of internal scattering locations. The grain boundaries are sites of crystallographic imperfections and these arrays of imperfections may also have different indexes of refraction which deflect light in a multiplicity of directions.

Further, even though the aluminum oxide after sintering has substantially zero porosity, traces of residual porosity may remain in grain boundaries or other locations in the finished product. Such traces of porosity would have a pronounced effect on light transmission, with resultant scattering and diffusion of light passing through the polycrystalline material. It is probable that a combination of these effects is involved in producing the desired degree of translucence in a pressed and sintered aluminum oxide orthodontic bracket.

It is significant that the bracket has a high degree of optical transmittance, which is believed due to the self bonding of high purity aluminum oxide in the polycrystalline material. It has been proposed in the past to form ceramic orthodontic brackets by pressing and cementing aluminum oxide powder. For example, in U.S. Patent No. 4,219,617 by Wallshein, aluminum oxide powder is commingled with other ceramic materials having a lower melting point than the aluminum oxide. The mixed powders are pressed in a hydraulic press and the resultant green compacts are sintered at temperatures in the range of from 1575 to 1675°C, or about the melting temperature of the other ceramic phase. The resultant liquid bonds the aluminum oxide particles together, forming a relatively dense and strong ceramic. This liquid phase bonding is often referred to in the jargon as "sintering," whereas it is more properly referred to as "liquid phase sintering" or "cementing", depending on the proportion of liquid present, since the individual aluminum oxide particles are cemented together by a second ceramic phase.

As a result of such processing, as described and claimed by Wallshein, an orthodontic bracket is white or slightly off-white. It may not be opaque since the inherent transparency of ceramic materials used in the manufacture will commonly let some light be transmitted through such a bracket. Liquid phase cementing may occur in porcelains, for example, and they have a slight degree of translucence. The degree of optical transmittance is, however, quite low and most of the light seen is reflected from the surface in view. This results in a milky white appearance where the ceramic has its own "color," albeit white or off-white. Such color cannot, of course, match the range of colors in human teeth, and as Wallshein states, the composition may be colored to the desired shade of white with a pigment to match adjacent teeth. The cost of having an inventory of orthodontic brackets to match the color range in teeth is prohibitive.

A ceramic orthodontic bracket is secured to a tooth with an adhesive substance. Good bonding of the adhesive to the base of the bracket is important so that it can withstand high occlusal forces and the loads applied during orthodontic correction. Controlled roughness of the base of the bracket may, therefore, be desirable to enhance bonding strength of the adhesive to the bracket. Preferably a smooth surface is provided on the base, and the adhesive is securely bonded to a prepared surface on the base. The base surface can be prepared by depositing a glass frit on the base and firing the frit for bonding the glass to the aluminum oxide. The surface is then primed with an organo-silane before application of the adhesive.

Surfaces of the orthodontic bracket should be smooth. Smoothness is promoted by employing polished dies and punches in the pressing operation. If desired, the surfaces may be smoothed by grinding, ultrasonic or abrasive polishing after sintering, however, that has not proved necessary. A surface having a roughness of about one half to one micron RMS is preferred. Roughness is largely a function of grain size in a well made bracket.

The pressing and sintering technique for forming a polycrystalline aluminum oxide article from aluminum oxide powder can result in an orthodontic bracket with precise dimensions. Precision is enhanced by careful control of the pressing operation for forming green compacts and the mix of particle sizes in the aluminum oxide powder. The sintering operation inherently causes shrinkage from the green compact to the finished article. The proportion of shrinkage can be controlled by attention to powder quantity and quality, mold geometry and pressure in green compact pressing. Care in these techniques can produce finished orthodontic brackets well within acceptable tolerance limits.

## Claims

1. A method for making a translucent polycrystalline ceramic orthodontic bracket **characterized by**:
pressing a powder consisting essentially of aluminum oxide plus magnesium oxide in the range of from 0.05 to 0.3 percent by weight at a sufficient pressure for forming a compact having a shape corresponding to at least a portion of the shape of the completed bracket; and
sintering the compact at a temperature in the range of from 1750 to 1850°C for a sufficient time for forming a bracket that is polycrystalline, has an average grain size in the range of 10 - 50 µm, has sufficient strength for withstanding the loads applied during orthodontic correction, and has sufficient translucency that visible light emitted from the front surface of the bracket comprises a portion backscattered from within the bracket and a sufficient portion transmitted from the base of the bracket to take on the color of an underlying tooth.

2. A method as recited in claim 1 **characterized by** sintering the compact at a sufficient temperature and for a sufficient time that the in-line transmittance of the bracket is at least 20% per 0.5 millimeter thickness.

3. A method as recited in claim 2 **characterized by** sintering the compact at a sufficient temperature and for a sufficient time that the in-line transmittance of the bracket is in the range of from 20% to 60% per 0.5 millimeter thickness.

4. A method as recited in claim 1 **characterized by** sintering the compact at a sufficient temperature and for a sufficient time that the average grain size is 30 microns.

5. A method as recited in any of the preceding claims **characterized by** sintering the compact for at least five hours at a temperature above 1750°C.

6. A method as recited in any of the preceding claims **characterized by** sintering the compact at the maximum sintering temperature for at least an hour.

7. A method as recited in any of the preceding claims **characterized by** sintering the compact in a hydrogen environment.

8. A method as recited in any of the preceding claims **characterized by** the aluminum oxide particles being sub-micron in size.

9. A method as recited in any of the preceding claims **characterized by** the aluminum oxide particles having an average particle size in the range of from 1/2 to one micron.

10. A method as recited in any of the preceding claims wherein the powder also comprises a temporary organic binder.

11. A method as recited in any of the preceding claims **characterized by** the aluminum oxide powder consisting essentially of 99.99% aluminum oxide.

12. A method as recited in any of the preceding claims **characterized by** sintering the compact at a sufficient temperature and time for reducing the porosity of the bracket to substantially zero.

13. A method as recited in any of the preceding claims **characterized by** preheating the compact in an oxidizing environment at a temperature in the range of from 1300 to 1400°C for at least one hour before sintering.

14. A method as recited in claim 13 **characterized by** heating the compact to the preheating temperature at a maximum rate of 100°C per hour.

## Patentansprüche

1. Verfahren zur Herstellung einer durchscheinenden, polykristallinen, keramischen orthodontischen Klammer, **gekennzeichnet durch**:
Pressen eines Pulvers, das im Wesentlichen aus Aluminiumoxid plus Magnesiumoxid im Bereich von 0,05 bis 0,3 Gew.-% besteht, mit einem ausreichenden Druck, um einen Presskörper herzustellen, dessen Form wenigstens einem Teil der Form der fertigen Klammer entspricht; und
Sintern des Presskörpers bei einer Temperatur im Bereich von 1750 bis 1850°C, bis eine Klammer entsteht, die polykristallin ist, eine durchschnittliche Korngröße im Bereich 10-50 µm und eine ausreichende Festigkeit besitzt, um den während der orthodontischen Korrektur auftretenden Kräften standzuhalten, und die so durchscheinend ist, dass von der Vorderseite der Klammer ausgesandtes sichtbares Licht einen Anteil umfasst, der aus dem Inneren der Klammer zurückgestreut wurde, und einen ausreichenden Anteil, der von der Basis der Klammer ausgesandt wurde, so dass die Klammer die Farbe eines darunterliegenden Zahnes annimmt.

2. Verfahren nach Anspruch 1, **dadurch gekennzeichnet, dass** der Presskörper bei einer ausreichenden Temperatur so lange gesintert wird, dass die Lichtdurchlässigkeit der Klammer mindestens 20% pro 0,5 Millimeter Dicke beträgt.

3. Verfahren nach Anspruch 2, **dadurch gekennzeichnet, dass** der Presskörper bei einer ausreichenden Temperatur so lange gesintert wird, dass die Lichtdurchlässigkeit der Klammer im Bereich von 20% bis 60% pro 0,5 Millimeter Dicke liegt.

4. Verfahren nach Anspruch 1, **dadurch gekennzeichnet, dass** der Presskörper bei einer ausreichenden Temperatur so lange gesintert wird, dass die durchschnittliche Korngröße 30 Mikrometer beträgt.

5. Verfahren nach einem der vorhergehenden Ansprüche, **dadurch gekennzeichnet, dass** der Presskörper mindestens 5 Stunden lang bei einer Temperatur über 1750°C gesintert wird.

6. Verfahren nach einem der vorhergehenden Ansprüche, **dadurch gekennzeichnet, dass** der Presskörper mindestens eine Stunde lang bei der maximalen Sintertemperatur gesintert wird.

7. Verfahren nach einem der vorhergehenden Ansprüche, **dadurch gekennzeichnet, dass** der Presskörper in einer Wasserstoffumgebung gesintert wird.

8. Verfahren nach einem der vorhergehenden Ansprüche, **dadurch gekennzeichnet, dass** die Aluminiumoxidteilchen submikroskopisch klein sind.

9. Verfahren nach einem der vorhergehenden Ansprüche, **dadurch gekennzeichnet, dass** die Aluminiumoxidteilchen eine durchschnittliche Teilchengröße im Bereich von ½ bis 1 Mikrometer aufweisen.

10. Verfahren nach einem der vorhergehenden Ansprüche, **dadurch gekennzeichnet, dass** das Pulver ferner ein temporäres organisches Bindemittel enthält.

11. Verfahren nach einem der vorhergehenden Ansprüche, **dadurch gekennzeichnet, dass** das Aluminiumoxidpulver im Wesentlichen aus 99,99% Aluminiumoxid besteht.

12. Verfahren nach einem der vorhergehenden Ansprüche, **dadurch gekennzeichnet, dass** der Presskörper bei einer ausreichenden Temperatur so lange gesintert wird, dass die Porosität der Klammer im Wesentlichen auf Null reduziert wird.

13. Verfahren nach einem der vorhergehenden Ansprüche, **dadurch gekennzeichnet, dass** der Presskörper vor dem Sintern mindestens eine Stunde lang in einer oxidierenden Umgebung bei einer Temperatur im Bereich von 1300 bis 1400°C vorerhitzt wird.

14. Verfahren nach Anspruch 13, **dadurch gekennzeichnet, dass** der Presskörper mit einer Geschwindigkeit von maximal 100 °C pro Stunde auf die Vorheiztemperatur erhitzt wird.

## Revendications

1. Procédé de fabrication d'un support orthodontique en céramique polycristallin translucide, **caractérisé par** les étapes qui consistent à:
comprimer une poudre essentiellement constituée d'oxyde d'aluminium et de l'oxyde de magnesium de l'ordre de 0,05 à 0,3 pour cent en poids à une pression suffisante pour former une ébauche compactée dont la forme correspond à au moins une partie de la forme du support terminé et
fritter l'ébauche compactée à une température située dans la plage de 1 750 à 1 850°C pendant une durée suffisante pour former un support polycristallin dont la taille moyenne des grains est comprise entre 10 et 50 µm, dont la résistance mécanique est suffisante pour résister aux charges appliquées pendant la correction orthodontique et dont la translucence est suffisante pour que la lumière visible émise par la surface avant du support comprenne une partie rediffusée par l'intérieur du support et une partie transmise par la base du support qui est suffisante pour que le support prenne la couleur d'une dent située en dessous de lui.

2. Procédé selon la revendication 1, **caractérisé par** l'étape qui consiste à fritter l'ébauche compactée à une température suffisante et pendant une durée suffisante pour que la transmittance en ligne du support soit d'au moins 20 % par 0,5 millimètre d'épaisseur.

3. Procédé selon la revendication 2, **caractérisé par** l'étape qui consiste à fritter l'ébauche compactée à une température suffisante et pendant une durée suffisante pour que la transmittance en ligne du support soit comprise dans la plage de 20 % à 60 % par 0,5 millimètre d'épaisseur.

4. Procédé selon la revendication 1, **caractérisé par** l'étape qui consiste à fritter l'ébauche compactée à une température suffisante et pendant une durée suffisante pour que la taille moyenne des grains soit de 30 micromètres.

5. Procédé selon l'une quelconque des revendications précédentes, **caractérisé par** l'étape qui consiste à fritter l'ébauche compactée pendant au moins 5 heures à une température supérieure à 1 750°C.

6. Procédé selon l'une quelconque des revendications précédentes, **caractérisé par** l'étape qui consiste à fritter l'ébauche compactée à la température maximale de frittage pendant au moins une heure.

7. Procédé selon l'une quelconque des revendications précédentes, **caractérisé par** l'étape qui consiste à fritter l'ébauche compactée dans un environnement hydrogéné.

8. Procédé selon l'une quelconque des revendications précédentes, **caractérisé en ce que** les particules d'oxyde d'aluminium ont une taille inférieure au micromètre.

9. Procédé selon l'une quelconque des revendications précédentes, **caractérisé en ce que** les particules d'oxyde d'aluminium ont une taille moyenne comprise dans la plage de 1/2 à un micromètre.

10. Procédé selon l'une quelconque des revendications précédentes, dans lequel la poudre contient également un liant organique temporaire.

11. Procédé selon l'une quelconque des revendications précédentes, **caractérisé en ce que** la poudre d'oxyde d'aluminium est essentiellement constituée d'oxyde d'aluminium à 99,99 %.

12. Procédé selon l'une quelconque des revendications précédentes, **caractérisé par** l'étape qui consiste à fritter l'ébauche compactée à une température suffisante et pendant une durée suffisante pour réduire la porosité du support essentiellement à zéro.

13. Procédé selon l'une quelconque des revendications précédentes, **caractérisé en ce qu'**avant le frittage, l'ébauche compactée est préchauffée dans un environnement oxydant à une température comprise dans la plage de 1 300 à 1 400°C pendant au moins une heure.

14. Procédé selon la revendication 13, **caractérisé par** l'étape qui consiste à chauffer l'ébauche compactée à la température de préchauffage à une vitesse maximum de montée en température de 100°C par heure.
